# EUROPÄISCHE PATENTSCHRIFT

(11) **EP 2 918 444 B1**
(45) Veröffentlichungstag und Bekanntmachung des Hinweises auf die Patenterteilung: **11.09.2019**
(21) Anmeldenummer: 15154115.8
(22) Anmeldetag: 06.02.2015
(51) Int. Cl.: B60P 1/48

(54) **Absetzkipper**
Skip loader
Basculeur de dépôt

(30) Priorität: 11.02.2014 DE 102014202476
(43) Veröffentlichungstag der Anmeldung: 16.09.2015
(73) Patentinhaber: Franz Xaver Meiller Fahrzeug- und Maschinenfabrik-GmbH & Co KG, 80997 München (DE)
(72) Erfinder: Stieglbauer, Peter, 85570 Markt Schwaben (DE); Stühler, Horst, 80939 München (DE); Drexler, Hubert, 82347 Bernried (DE)
(74) Vertreter: Weickmann & Weickmann PartmbB

(56) Entgegenhaltungen:
- DE-A1- 2 539 972
- DE-A1-102005 005 018
- DE-U1- 20 201 957
- DE-U1- 29 810 104
- DE-U1-202005 015 649

## Beschreibung

Die Erfindung betrifft einen Absetzkipper, umfassend
- einen Rahmen,
- eine an dem Rahmen angebrachte Hubvorrichtung mit zwei um eine nahe des Hecks des Absetzkippers verlaufende, normalerweise horizontal liegende gemeinsame Schwenkachse schwenkbaren Auslegerarmen zum Heben und Senken eines zwischen den Auslegerarmen positioniert daran anzuhängenden und mit einer Kipplagerbolzenanordnung ausgestatteten Wechselbehälters, so dass der Wechselbehälter in einer Behälterwechselbetriebsart durch Verschwenken der Auslegerarme über das Heck des Absetzkippers hinweg auf diesen aufgeladen oder von diesem abgesetzt- und in einer Kippbetriebsart in eine Kippstellung unter Verbleib auf dem Absetzkipper bewegt werden kann,
- eine hydraulische Antriebsvorrichtung mit wenigstens einem hydraulischen Hubzylinder zum Verschwenken der Auslegerarme um die Schwenkachse,
- eine Kipphakenanordnung mit wenigstens einem zwischen einer Passivstellung und einer Fangstellung bewegbaren Kipphaken zur Ineingriffnahme eines Wechselbehälters an dessen Kipplagerbolzenanordnung in der Kippbetriebsart,
- eine Stützvorrichtung mit ausfahrbaren und einziehbaren Stützfüßen zur Abstützung und Stabilisierung des Absetzkippers am Boden,
- eine Steuereinrichtung zur Steuerung von Betriebsfunktionen des Absetzkippers einschließlich der Schwenkbewegungen der Auslegerarme, der Ausfahr- und Einziehbewegungen der Stützfüße und der Bewegungen des wenigstens einen Kipphakens, und eine Bedienvorrichtung mit Bedienelementen zur Abgabe von Steuerbefehlen an die Steuereinrichtung und zur Aktivierung der Betriebsfunktionen.

Derartige Absetzkipper sind in diversen Ausgestaltungen bekannt, so z. B. aus der DE 20 2005 021 742 U1 oder DE 10 2008 020 777 A1 oder DE 20 201 957 U1 oder DE 29 810 104 U1 oder DE 25 39 972 A1 oder DE 20 2005 015 649 U1 oder DE 10 2005 005 018 A1.

Absetzkipper dienen zum Transport von standardisierten Wechselbehältern und umfassen in bekannter Weise eine Hubvorrichtung, mittels welcher ein jeweiliger Wechselbehälter heckseitig des Absetzkippers auf dem Boden abgesetzt werden - oder in umgekehrter Richtung vom Boden aufgenommen und auf einer Ladebrücke des Absetzkippers aufgenommen werden kann. Die Hubvorrichtung hat zwei Auslegerarme mit teleskopisch ausfahrbaren und einziehbaren Endelementen, an denen der Wechselbehälter mittels Ketten oder Seilen hängend befestigt ist. Durch Verschwenken der Auslegerarme erfolgt die Absetz- bzw. Aufnahmebewegung des betreffenden Wechselbehälters. Die hier betrachteten Absetzkipper sind ferner in der Lage einen Wechselbehälter heckseitig auszukippen, wobei auch zu diesem Zwecke die Auslegerarme verschwenkt werden. Allerdings ist vorher ein heckseitiger Kipphaken des Absetzkippers mit einem Kipplagerbolzen des Behälters in Eingriff gebracht worden, wobei der Kipphaken dafür sorgt, dass bei Verschwenken der Auslegerarme der daran hängende Wechselbehälter in eine schräge Kippstellung gezwungen wird.

Während der Betriebsabläufe des Absetzens eines Wechselbehälters, des Aufnehmens eines Wechselbehälters, des Überführens eines Wechselbehälters in eine Kippstellung, das Zurückführen eines Wechselbehälters aus der Kippstellung in eine Fahrstellung auf der Ladebrücke des Absetzkippers usw. sind bei den bekannten Absetzkippern mehrere Betriebsfunktionen von einer Bedienungsperson mittels einer Bedienvorrichtung zu aktivieren und einzeln nacheinander zu steuern, bis der gewünschte Betriebsablauf vollständig durchgeführt wurde. Zu diesen einzelnen Betriebsfunktionen gehört je nach Ausstattung des Absetzkippers das hydraulische Ausfahren oder Einziehen von Stützfüßen zur Stabilisierung des Absetzkippers am Boden, das Bewegen von Ladungssicherungselementen, wie etwa Klemmbacken oder/und Verriegelungsklauen aus Ladungssicherungspositionen in inaktive bzw. Freigabepositionen - und umgekehrt, das Überführen des Kipphakens in eine bestimmte Sollstellung, das Verschwenken der Auslegerarme und ggf. das teleskopische Ausfahren oder Einziehen der Endelemente der Auslegerarme.

Je nach Erfahrung und Geschick der Bedienungsperson beim Steuern dieser einzelnen Betriebsfunktionen mittels der Bedienvorrichtung werden die beabsichtigten Betriebsabläufe mal mehr und mal weniger optimal erfolgen, wodurch ein gewisses Sicherheitsrisiko besteht. Außerdem ist die so erfolgende Steuerung der betreffenden Betriebsabläufe unkomfortabel für die Bedienungsperson.

Der Erfindung liegt die Aufgabe zugrunde, einen Absetzkipper der eingangs genannten Art dahingehend zu verbessern, dass zumindest einige seiner Betriebsabläufe aus Sicht der Bedienungsperson komfortabler und in einer wiederholbar optimierteren Weise als bisher steuerbar sind.

Zur Lösung dieser Aufgabe wird ein Absetzkipper gemäß Anspruch 1 vorgeschlagen.

Automatisch aktiviert und gesteuert ausgeführt bedeutet, dass nach Starten eines solchen Betriebsablaufprogrammes Betriebsfunktionen des Absetzkippers in vorbestimmter zeitlich abgestimmter Folge ausgeführt werden, wobei es nicht ausgeschlossen sein soll, dass eine Bedienungsperson durch Betätigung bestimmter Bedienelemente der Bedienvorrichtung die automatische Steuerung der jeweiligen Betriebsfunktionen beeinflussen oder übersteuern kann, etwa um eine Betriebsfunktion im laufenden Betriebsablaufprogramm schneller oder langsamer ablaufen zu lassen, wie etwa das Verschwenken der Auslegerarme. Die einzelnen Betriebsfunktionen können je nach gewünschtem Betriebsablauf sequentiell oder ggf. zumindest teilweise auch simultan programmgesteuert ausgeführt werden, wie etwa das Lösen von Klemmbacken und Verriegelungsklauen vom Wechselbehälter auf dem Absetzkipper.

Gemäß einer bevorzugten Ausführungsform der Erfindung sind verschiedene Betriebsablaufprogramme abgespeichert und mittels der Steuereinrichtung ausführbar. Hierzu umfasst die Steuereinrichtung u. a. programmierbare elektronische Steuermittel, Hydraulikventil-Steuermittel und ggf. Pneumatikventil-Steuermittel sowie elektrische Steuermittel.

So können Betriebsablaufprogramme vorgesehen sein für folgende Arbeitsvorgänge des Absetzkippers:
- Absetzen eines Wechselbehälters,
- Aufnehmen eines Wechselbehälters,
- Überführen eines Wechselbehälters in eine Kippstellung,
- Zurückführen des Wechselbehälters aus einer Kippstellung in eine Fahrstellung,
- Ladungssicherung und Transportbereitmachen des Absetzkippers mit bereits darauf aufgenommenem Wechselbehälter,
- Freigabe eines auf dem Absetzkipper befindlichen Wechselbehälters aus seiner Ladungssicherung usw.

Im Falle eines nicht mit einer Ladungssicherungseinrichtung ausgestatteten Absetzkippers umfasst das Betriebsablaufprogramm für das Absetzen eines Wechselbehälters erfindungsgemäß die zeitlich abgestimmte Ausführung der Betriebsfunktionen:
- Ausfahren der Stützfüße,
- Überführen jedes Kipphakens der Kipphakenanordnung in die inaktive Stellung und
- das Schwenken der Auslegerarme um deren Schwenkachse über das Heck hinaus. Sofern der Absetzkipper eine steuerbare Ladungssicherungseinrichtung aufweist, wie sie z. B. in der DE 20 2005 021 742 U1 erläutert ist, so kann auch die Betriebsfunktion der Freigabe des Wechselbehälters aus seinem Ladungssicherungszustand durch entsprechendes Zurückziehen von Ladungssicherungselementen in das Betriebsablaufprogramm zum Absetzen des Wechselbehälters integriert sein.

Sofern der Absetzkipper mit teleskopierbaren Auslegerarmen ausgestattet ist, kann auch das teleskopische Ausfahren oder Einziehen der Endelemente der Auslegerarme eine in ein Betriebsablaufprogramm integrierte Betriebsfunktion sein.

Erfindungsgemäß umfasst der Absetzkipper eine Sensoreinrichtung zur Erfassung einer Schrägstellung des Absetzkippers relativ zur Horizontalstellung bzw. Horizontalebene, wobei die Stützvorrichtung mittels der Steuereinrichtung nach Maßgabe von Messinformationen dieser Sensoreinrichtung steuerbar ist, um die Stützfüße so auszufahren, dass der Absetzkipper aus einer etwaigen Schrägstellung heraus der Horizontalstellung zumindest angenähert wird, wobei die Betriebsfunktion des Ausfahrens der Stützfüße das Erfassen einer etwaigen Schrägstellung des Absetzkippers - und das Ausfahren der Stützfüße in einer den Absetzkipper zumindest näherungsweise in die Horizontalstellung einstellenden Weise umfasst. Diese Betriebsfunktion ist ein vorteilhaftes Sicherheitsmerkmal des Absetzkippers, welches sicherstellen soll, dass ein Wechselbehälter während des Absetzens oder Aufladens in seiner horizontal austarierten Hängelage verbleibt. Die Stützfüße sind insoweit unabhängig voneinander ausfahrbar und können vorzugsweise so eingestellt werden, dass sie sowohl eine Schrägstellung des Absetzkippers um dessen Längsachse als auch eine Schrägstellung des Absetzkippers um dessen Querachse weitestgehend aufheben können.

Das Schwenken der Auslegerarme um deren Schwenkachse kann eine sogenannte Überladungskontrolle umfassen, bei der eine Wägung des Wechselbehälters in einer bestimmten Schwenkstellung der Auslegerarme erfolgt. Stellt sich dabei heraus, dass das Gewicht des aufgenommenen Wechselbehälters mit Ladung ein zulässiges maximales Gewicht überschreitet, so darf der Absetzkipper nicht im öffentlichen Verkehr bewegt werden, und es sind Maßnahmen zur Reduzierung des Behältergewichtes durchzuführen.

Wie schon angesprochen, sollte der Absetzkipper in einer bevorzugten Ausführungsform eine mittels der Steuereinrichtung steuerbare Ladungssicherungseinrichtung aufweisen, mittels welcher ein auf dem Absetzkipper aufgenommener Wechselbehälter gegen Rutschen und ggf. Abheben gesichert werden kann, wobei die gemäß einem betreffenden Betriebsablaufprogramm aktivierten und gesteuerten bestimmten Betriebsfunktionen ferner das Überführen der Ladungssicherungseinrichtung in einen den Behälter aus der Sicherung freigebenden Zustand vor dem Schwenken der Auslegerarme um deren Schwenkachse umfasst, wobei in den Ansprüchen 6 und 7 Detaillösungen hierzu angegeben sind.

Ein Betriebsablaufprogramm ist dafür vorgesehen, den Absetzkipper bei daraufgenommenem Wechselbehälter für eine Fahrt vorzubereiten, wobei die gemäß diesem weiteren Betriebsablaufprogramm aktivierten und gesteuerten bestimmten Betriebsfunktionen:
- das teleskopische Einfahren von Endelementen der Auslegerarme,
- das Überführen der Ladungssicherungseinrichtung in einen den Wechselbehälter auf dem Absetzkipper sichernden Zustand,
- das Überführen des wenigstens einen Kipphakens in eine Transportstellung und
- das Einziehen der Stützfüße
umfassen.

Die Bedienvorrichtung umfasst Bedienelemente, die zur Auswahl der einzelnen Betriebsfunktionen zur jeweiligen Steuerung mittels der Steuereinrichtung einzeln betätigbar sind, so dass die Bedienungsperson auch die Option hat, den Absetzkipper in herkömmlicher Weise durch Betätigung von Bedienelementen der Bedienvorrichtung zu steuern, wobei jedoch ein betreffendes Betriebsablaufprogramm durch serielles Betätigen der den programmgemäß aktivierten Betriebsfunktionen zugeordneten Bedienelemente innerhalb eines vorbestimmten Zeitfensters auszuwählen ist und dann durch Betätigen eines weiteren Bedienelementes zu starten ist. Gemäß einer bevorzugten Ausführungsform der Erfindung handelt es sich bei der Bedienvorrichtung um eine Funkfernbedienung, welche Funksteuerbefehle an die Steuereinrichtung abgeben kann.

Eine alternative Ausführungsform der Bedienvorrichtung weist Bedienelemente auf, die jeweils einzelnen Betriebsablaufprogrammen zu deren Aufruf zugeordnet sind. Denkbar ist auch eine Bedienvorrichtung, die per Sprachsteuerung bedienbar ist.

Die vorliegende Erfindung entlastet die Bedienungsperson von der Einzelsteuerung von Betriebsfunktionen häufig durchzuführender Betriebsabläufe, indem sie diese zumindest teilautomatisch bzw. teilstandardisiert in vorbestimmter zeitlicher Abstimmung ausführen lässt. Die Arbeit mit dem Absetzkipper gestaltet sich daher komfortabler als bisher und führt bei Nutzung der Betriebsablaufprogramme zu reproduzierbareren und sichereren Betriebsabläufen. Andererseits hat die Bedienungsperson auch die Möglichkeit, den Absetzkipper in herkömmlicher Weise durch Einzelsteuerung der auszuführenden Betriebsfunktionen zu steuern.

Die Steuereinrichtung ist vorzugsweise dazu eingerichtet mittels betreffender Sensoren zu prüfen, ob eine in einem aktuell gewählten Betriebsablaufprogramm integrierte Betriebsfunktion bereits vor dem Start des Betriebsablaufprogramms ausgeführt und nicht wieder aufgehoben oder im Ergebnis rückgängig gemacht wurde. Also etwa ob der Kipphaken bei Start des Betriebsablaufprogrammes bereits in der Passivstellung abgeklappt vorliegt. Die Steuereinrichtung entscheidet dann, ob zulässige Ausgangsbedingungen für die Ausführung des Betriebsablaufprogrammes gegeben oder automatisch herstellbar sind. Wenn zulässige Anfangsbedingungen vorliegen, führt die Steuereinrichtung das gewünschte Betriebsablaufprogramm aus.

Die Erfindung wird nachstehend unter Bezugnahme auf die Figuren näher erläutert.
- Figur 1: zeigt ein Ausführungsbeispiel eines Absetzkippers nach der Erfindung mit einem in Fahrstellung darauf aufgenommenen Wechselbehälter in einer Seitenansicht, wobei das Basisfahrzeug mit gestrichelten Linien dargestellt ist.
- Figur 2: zeigt in einer der Figur 1 entsprechenden Ansicht den Absetzkipper aus Figur 1 mit ausgefahrenen Stützfüßen und einem in die inaktive Stellung verschwenkten Kipphaken in Vorbereitung eines Behälterabsetzvorgangs.
- Figur 3: zeigt den Absetzkipper aus Figur 1 und Figur 2 in einer entsprechenden Ansicht nach Durchführung eines Behälterabsetzvorgangs.
- Figur 4: zeigt den Absetzkipper mit vertikal aufrecht stehenden Auslegerarmen zur Durchführung einer Überladungskontrolle.
- Figur 5: zeigt den Absetzkipper während eines Kippvorgangs in einer Kippbetriebsart.
- Figur 6: zeigt den Absetzkippers während eines Kippvorgangs in einer weiteren Kippbetriebsart.
- Figur 7: zeigt den Absetzkipper in einer Rückansicht auf schrägem Untergrund.
- Figur 8: zeigt eine schematische Darstellung einer Ladungssicherungseinrichtung.
- Figur 9: zeigt ein Fernbediengerät als Bedienvorrichtung des Absetzkippers in perspektivischer Darstellung.

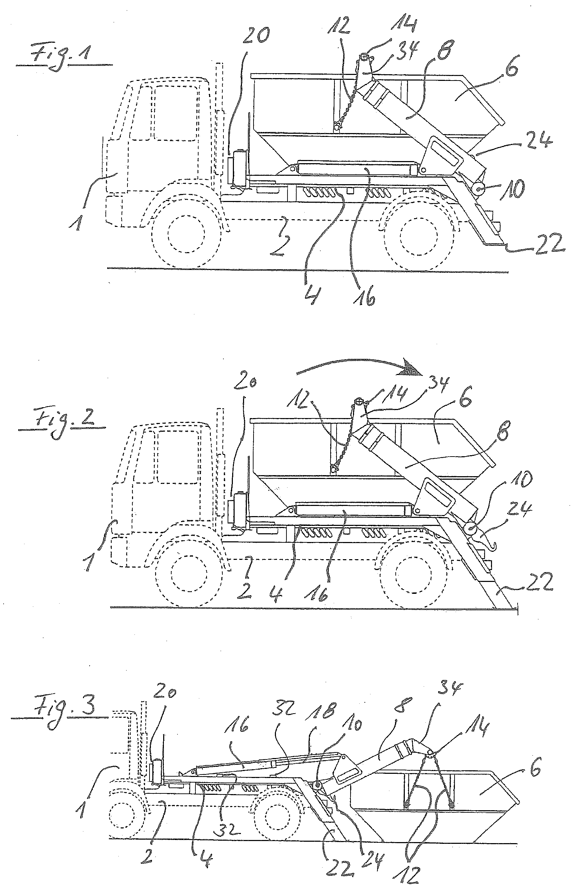

In den Figuren 1 - 6 ist ein Ausführungsbeispiel eines Absetzkippers in verschiedenen Betriebszuständen dargestellt.

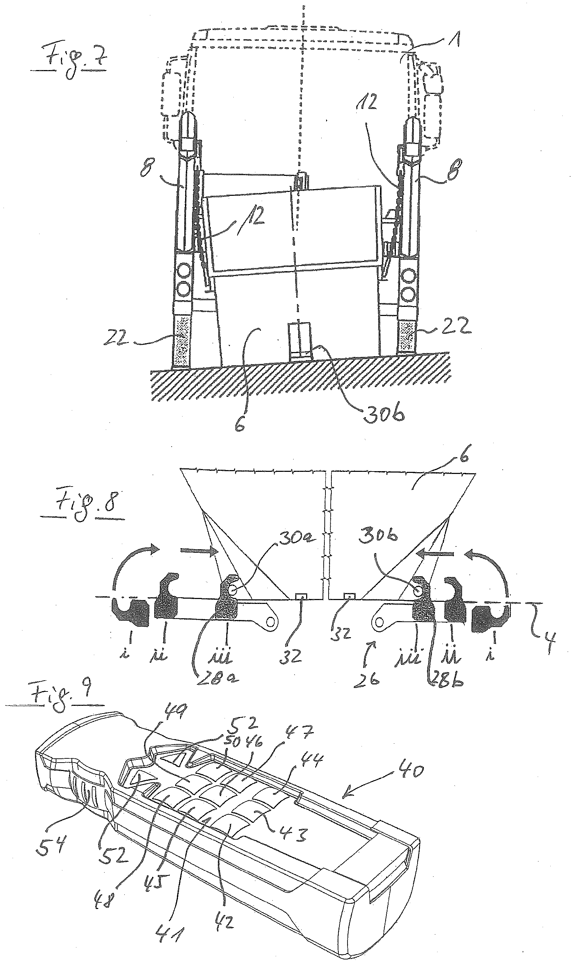

Der Absetzkipper weist auf einem Grundrahmen 2 des Basisfahrzeugs 1 einen Hilfsrahmen mit Ladebrücke 4 auf. Auf dem Hilfsrahmen steht in der Darstellung gemäß Figur 1 ein Wechselbehälter 6. Der Wechselbehälter 6 befindet sich zwischen zwei in den Figuren 1 - 6 hintereinander liegenden Auslegerarmen 8, die um eine gemeinsame horizontale und quer zur Fahrzeuglängsrichtung verlaufende Schwenkachse 10 am Heck des Fahrzeugs verschwenkbar sind, um den Wechselbehälter 6 aus der in Figur 1 gezeigten Fahrstellung in die in Figur 3 gezeigte Absetzstellung zu überführen, wobei der Wechselbehälter 6 mittels Ketten 12 an Kettenaufhängungen 14 an den äußeren Enden der Auslegerarme 8 hängend befestigt ist. Anstelle von Ketten könnten auch Tragseile vorgesehen sein. Zum Verschwenken der Auslegerarme 8 ist eine hydraulische Antriebsvorrichtung vorgesehen, die für jeden der beiden Auslegerarme 8 einen doppelt wirkenden hydraulischen Schwenkzylinder 16 umfasst, der mit seinem zylindergehäuseseitigem Ende gelenkig an der Ladebrücke 4 befestigt ist. Das kolbenstangenseitige Ende des betreffenden Schwenkzylinders 16 ist gelenkig an dem ihm zugeordneten Auslegerarm 8 befestigt, so dass die hydraulischen Schwenkzylinder 16 bei vollständig eingezogener Kolbenstange 18 im Wesentlichen flach auf der Ladebrücke liegen, wie dies in Figur 1 erkennbar ist. Ein Ausfahren der Kolbenstangen 18 der hydraulischen Schwenkzylinder 16 führt ausgehend von der in Figur 1 gezeigten Situation zu einem Verschwenken der Auslegerarme 8 um ihre Schwenkachse 10, wobei der an den Auslegerarmen 8 hängende Wechselbehälter 6 dabei zunächst angehoben und nach Überwindung einer Totpunktstellung der Auslegerarme 8 schließlich heckseitig des Absetzkippers wieder abgesenkt wird, bis die Situation in Figur 3 erreicht ist. Das Schwenken der Auslegerarme 8 um ihre Schwenkachse 10 ist eine von vielen Betriebsfunktionen des Absetzkippers, die mittels einer Steuereinrichtung 20 steuerbar sind. Zur Aktivierung der Steuereinrichtung 20 ist wenigstens eine Bedienvorrichtung 40 (vgl. Figur 9) vorgesehen. Dies ist im Beispielsfall eine Funkfernbedienung. Üblicherweise ist jedoch zusätzlich wenigstens eine ortsfest am oder im Fahrzeug vorgesehene Bedienvorrichtung vorhanden.

Vor dem Verschwenken der Auslegerarme 8 aus der in Figur 1 gezeigten Situation heraus sind jedoch noch andere mittels der Steuereinrichtung 20 zu steuernde Betriebsfunktionen des Absetzkippers durchzuführen. Hierzu gehört das Ausfahren zweier Stützfüße 22 am heckseitigen Ende des Absetzkippers mittels zugeordneter Hydraulikzylinder (nicht gezeigt). Figur 2 zeigt den Absetzkipper nach Ausführung der Betriebsfunktion "Stützfüße 22 ausfahren". In dem Zustand gemäß Figur 2 stützen die Stützfüße den Absetzkipper am Boden ab, um ihn bei Behälterwechselvorgängen oder Kippvorgängen zu stabilisieren. Vorzugsweise sind die Stützfüße 22 unabhängig voneinander ausfahrbar und einziehbar, um den Absetzkipper auf schrägem Untergrund in eine Horizontalposition einstellen zu können, wie dies in Figur 7 angedeutet ist.

Das gesteuerte Ausfahren der Stützfüße 22 kann nach Maßgabe von Messinformationen einer Sensoreinrichtung (nicht gezeigt) erfolgen, welche eine Schrägstellung des Absetzkippers relativ zur Horizontalen sowohl bezogen auf eine Längsachse als auch bezogen auf eine Querachse des Absetzkippers erfasst und z.B. Neigungssensoren enthält, die am Absetzkipper fixiert sind. Die Steuereinrichtung 20 kann somit unter Berücksichtigung einer sensorisch ermittelten Schrägstellung des Absetzkippers die Stützfüße 22 unabhängig voneinander so ausfahren, dass sich der Absetzkipper zumindest näherungsweise horizontal ausrichtet, um einen Wechselbehälter 6 sicher aufnehmen, absetzen oder ggf. auskippen zu können.

Eine weitere Betriebsfunktion ist das Abklappen eines Kipphakens 24 aus einer Fahrstellung gemäß Figur 1 in eine inaktive Stellung gemäß Figur 2. Der Kipphaken 24 ist um eine zu der Schwenkachse 10 parallele und im Beispielsfall koaxiale Klappachse 26 schwenkbar, wobei das Verschwenken durch einen pneumatischen Antrieb (nicht gezeigt) erfolgt, der ebenfalls mittels der Steuereinrichtung 20 steuerbar ist. Die Betriebsfunktion "Kipphaken abklappen" erfolgt beim Behälterabsetzvorgang vor dem Verschwenken der Auslegerarme 8 aus ihrer Stellung gemäß Figur 1.

Als weitere einleitende Betriebsfunktionen des Absetzkippers vor dem Verschwenken der Auslegerarme 8 sind noch Ladungssicherungselemente einer steuerbaren Ladungssicherungseinrichtung zu deaktivieren, um den abzusetzenden Wechselbehälter 6 zum Abheben von der Ladebrücke 4 freizugeben.

In Figur 8 ist in einer rein schematischen Darstellung eine Ladungssicherungseinrichtung illustriert. Diese umfasst eine Behälterverriegelungseinrichtung 26 mit Verriegelungsklauen 28a, 28b. In Figur 8 sind eine vordere Verriegelungsklaue 28a und eine hintere Verriegelungsklaue 28b in drei während eines Verriegelungsvorganges aufeinanderfolgenden Stellungen gezeigt. In einer ersten inaktiven Stellung sind die Verriegelungsklauen 28a und 28b in einer Führungsnut der Ladebrücke in eine Senkstellung verschwenkt (vgl. i in Figur 8). Ein Verriegelungsvorgang beginnt nach Abstellen eines Wechselbehälters 6 auf der Ladebrücke 4 damit, dass die Verriegelungsklauen 28a, 28b aus ihrer versenkten Position i vor und hinter dem Wechselbehälter 6 heraus nach oben verschwenkt werden, wie dies durch die bogenförmigen Pfeile in Figur 8 angedeutet ist. Ausgehend von der Situation ii werden die Verriegelungsklauen 28a, 28b mit ihren zum Wechselbehälter 6 weisenden Verriegelungsmäulern soweit zum Wechselbehälter 6 verschoben, bis sie jeweils einen Kipplagerbolzen 30a, 30b des Wechselbehälters 6 mit ihren Verriegelungsmäulern in Eingriff nehmen, wie dies in der Situation iii in Figur 8 dargestellt ist. Die Verriegelungsklauen 28a, 28b werden von hydraulischen Zylindern (nicht gezeigt) angetrieben, die ihrerseits wiederum mittels der Steuereinrichtung 20 steuerbar sind. Zum Entriegeln des Wechselbehälters 6 aus dem Verriegelungszustand iii in Figur 8, werden die Verriegelungsklauenbewegungen in umgekehrter Folge durchlaufen, so dass die Verriegelungsklauen 28a, 28b schließlich wieder in ihre versenkten Stellungen in der Führungsnut der Ladebrücke verschwunden sind. Es kommen somit als weitere Betriebsfunktionen des Absetzkippers das "Verriegeln des Wechselbehälters" und das "Entriegeln des Wechselbehälters" hinzu.

Mit 32 sind in Figur 8 Klemmbacken bezeichnet, die quer zur Fahrzeuglängsrichtung hydraulisch verstellbar sind, um einen Wechselbehälter 6 auf der Ladebrücke 4 einzuklemmen. Die Klemmbacken 32 sind an beiden Seiten des Absetzkippers vorgesehen, so dass sie einen Wechselbehälter 6 an dessen gegenüberliegenden Seiten klemmbar beaufschlagen können. Auch der hydraulische Antrieb der Klemmbacken 32 ist mittels der Steuereinrichtung 20 steuerbar.

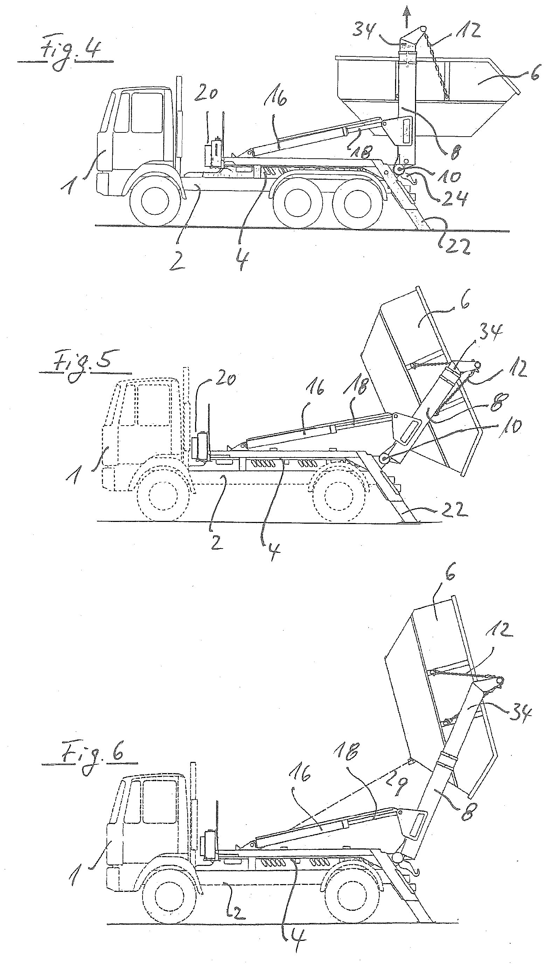

Eine weitere Betriebsfunktion des Absetzkippers ist eine "Überladungskontrolle". Ein Überladungskontrollvorgang ist in Figur 4 angedeutet. Dazu sind die Auslegerarme 8 in eine Vertikalstellung verschwenkt worden. Die Auslegerarme 8 sind teleskopierbar, d.h. sie weisen Endelemente 34 auf, die teleskopisch in Auslegerarmlängsrichtung ein- und ausfahrbar sind. Als Antrieb für das teleskopische Ausfahren bzw. Einfahren der Endelemente 34 sind ebenfalls doppelt wirkende hyraulische Zylinder (nicht gezeigt) vorgesehen, die mittels der Steuereinrichtung 20 steuerbar sind. In der Betriebsfunktion "Überladungskontrolle" werden die Endelemente 34 ausgehend von der Vertikalstellung der Auslegerarme 8 gemäß Figur 4 um einen Betrag nach oben ausgefahren, wobei der hydraulische Lastdruck im hydraulischen Antriebssystem der Endelemente 34 als Maß für das aktuelle Gewicht des Wechselbehälters 6 mit Ladung erfasst wird. Im Falle der Überladung, d.h. der Überschreitung eines zulässigen Maximalgewichtes darf der Absetzkipper nicht im öffentlichen Verkehr bewegt werden und es sind geeignete Maßnahmen zur Reduzierung des Behältergewichtes durchzuführen.

Figur 5 zeigt den Absetzkipper während der Ausführung einer weiteren Betriebsfunktion, nämlich in einer Kippbetriebsart zum Auskippen eines Wechselbehälters 6 heckseitig des Absetzkippers. Ausgehend von einem Ausgangszustand gemäß Figur 1 sind auch für den Kippvorgang zunächst die Stützfüße 22 bis zum festen Bodenkontakt auszufahren und ferner die Ladungssicherungselemente (Verriegelungsklauen/Klemmbacken) in ihre inaktive Stellung zurückzuziehen, um den Wechselbehälter 6 zum Abheben von der Ladebrücke freizugeben. Ferner ist als weitere Betriebsfunktion der Kipphaken 24 in eine Fangstellung hochzuklappen, sofern dies noch nicht geschehen ist, so dass der Kipphaken 24 den hinteren Kipplagerbolzen 30b (vgl. Figur 7 oder Figur 8) in Eingriff nehmen kann, wenn der Wechselbehälter 6 durch Verschwenken der Auslegerarme 8 nach hinten und oben bewegt wird. Durch das Festhalten des Wechselbehälters 6 an dessen Kipplagerbolzen 30b gerät der Wechselbehälter 6 aus einer hängend austarierten Horizontalposition heraus in eine Schrägstellung (vgl. Figur 5), so dass schließlich der Behälterinhalt heckseitig des Absetzkippers aus dem Wechselbehälter 6 herausrutschen kann.

Figur 6 zeigt einen weiteren Kippbetriebsmodus, wobei der Wechselbehälter 6 mittels einer am hinteren Kipplagerbolzen 30b des Wechselbehälters und vorn an der Ladebrücke befestigten Kippkette 9 am Kipplagerbolzen 30b festgehalten wird, so dass ausgehend von einer bestimmten Schwenkstellung der Auslegerarme 8 ein teleskopisches Ausfahren der Endelemente 34 der Auslegerarme 8 den Wechselbehälter 6 in die in Figur 6 gezeigte schräge und hohe Kippstellung zwingt.

Die erläuterten Betriebsfunktionen können mittels der in Figur 9 gezeigten Funkfernbedienung 40 durch Betätigen von Bedienelementen 42 - 54 einzeln und wahlweise aufgerufen und aktiviert werden, wobei entsprechende Funkbefehlssignale von der Funkfernbedienung 40 zu einem Empfänger der Steuereinrichtung 20 übermittelt werden. Die Steuereinrichtung kann diese Funkbefehlssignale auswerten und in die gewünschten Steuerungsoperationen umsetzen. Soweit entspricht das unter Bezugnahme auf die Zeichnungen bisher beschriebene Ausführungsbeispiel den Stand der Technik.

Gemäß der vorliegenden Erfindung können jedoch zur Durchführung bestimmter Betriebsabläufe aufzurufende und zu aktivierende Betriebsfunktionen gruppenweise zusammengefasst und nach einem Betriebsablaufprogramm in zeitlich abgestimmter Folge automatisch aktiviert und ausgeführt werden.

Ein Beispiel eines solchen Betriebsablaufs ist das Absetzen eines Wechselbehälters 6 vom Absetzkipper, wie dies unter Bezugnahme auf die Figuren 1 - 3 erläutert wurde. Sofern der Absetzkipper all die beschriebenen Komponenten und deren Einzelbetriebsfunktionen umfasst, gehört zu dem Betriebsablaufprogramm des Absetzkippers:
- das Ausfahren der Stützfüße bis zum Boden,
- das Abklappen des Kipphakens in die inaktive Stellung,
- das hydraulische Zurückfahren der Klemmbacken 32,
- das Entriegeln des Wechselbehälters 6 durch Zurückfahren der Verriegelungsklauen 28a, 28b in ihre versenkte Stellung,
- das Verschwenken der Auslegerarme und ggf. das teleskopische Ausfahren der Endelemente 34 zur Durchführung einer Überladungskontrolle gemäß Figur 4 und/oder zur Einstellung einer jeweiligen Soll-Auslegerarmlänge.

Sollte der Absetzkipper mit einzelnen Komponenten, wie etwa der Ladungssicherungsvorrichtung, nicht ausgestattet sein, so entfallen selbstverständlich deren Betriebsfunktionen. Das betreffende Betriebsablaufprogramm sorgt dafür, dass die verschiedenen Betriebsfunktionen zeitlich passend abgestimmt ablaufen, wobei einzelne Betriebsfunktionen nur streng sequentiell aufeinanderfolgen und andere Betriebsfunktionen zumindest teilweise simultan ablaufen können. Die Bedienungsperson muss somit nicht alle einzelnen Betriebsfunktionen nacheinander aufrufen und die Steuerung jeder einzelnen Betriebsfunktion durch Betätigen von Bedienelementen 42 - 54 stets beeinflussen. Gemäß der vorliegenden Erfindung hat die Bedienungsperson lediglich das gewünschte Betriebsablaufprogramm aufzurufen und zu starten, welches dann für die gewünschte Abfolge der Betriebsfunktionen in einer weitgehend optimierten Weise sorgt.

Die Auswahl des gewünschten Betriebsablaufprogrammes kann durch Drücken einer Tastenkombination auf dem Tastenfeld 41 der Funkfernbedienung 40 vorgenommen werden. Vorzugsweise leuchten die einzelnen Tasten 42 - 52 nach deren Betätigung auf, so dass die Bedienungsperson sofort sehen kann, welche Betriebsfunktion gewählt wurde. Gemäß einer Variante der Erfindung umfasst die Tastenkombination das Drücken von Tasten, die den einzelnen Betriebsfunktionen zugeordnet sind, innerhalb eines kurzen Zeitfensters, von z.B. maximal 5 Sekunden. Das Starten des ausgewählten Betriebsablaufprogrammes erfolgt dann durch Betätigung von Richtungstasten 52, 53 oder durch Drehen eines Daumenrades 54 der Funkfernbedienung 40 je nach Betriebsablaufprogramm. Im Falle des Betriebsablaufprogrammes zum Absetzen eines Wechselbehälters 6 vom Absetzkipper erfolgt das Starten dieses Programmes nach dessen Auswahl durch Auslenken des Daumenrades 54 im Uhrzeigersinn, ausgehend von einer Neutralstellung des Daumenrades 54. Die Geschwindigkeit der Schwenkbewegung der Auslegerarme 8 kann dann von der Bedienperson nach Maßgabe der Auslenkung des Daumenrades 54 gesteuert werden.

Das Daumenrad 54 ist so zu seiner Neutralstellung hin vorgespannt, dass es diese nach Loslassen automatisch einnimmt. Erfolgt dies während des Betriebsablaufprogrammes des Absetzens eines Wechselbehälters 6, so wird dieses Betriebsablaufprogramm unterbrochen, kann jedoch durch erneutes Auslenken des Daumenrades 54 im Uhrzeigersinn fortgesetzt werden, wobei die Unterbrechung nicht länger als z.B. 3 Sekunden dauern darf, weil sonst das Betriebsablaufprogramm nicht weiter fortgesetzt wird und die Bedienperson die noch auszuführenden Betriebsfunktionen in konventioneller Art einzeln mittels der Funkfernbedienung zu steuern hat.

Wie bereits vorher erwähnt, kann der Absetzkipper zur Durchführung verschiedener Betriebsablaufprogramme eingerichtet sein, z.B. zur Aufnahme eines Wechselbehälters 6 aus der in Figur 3 gezeigten Position heraus auf die Ladebrücke 4 und zur Herstellung des Ausgangszustands (Fahrbereitschaftszustandes) des Absetzkippers gemäß Figur 1, wobei dann die Stützfüße 22 eingefahren, der Kipphaken 24 hochgeklappt - und die Ladungssicherungselemente 28a, 28b; 32 in ihrer den Behälter verriegelnden bzw. klemmenden Position eingestellt sind.

Ein weiteres Betriebsablaufprogramm kann z.B. lediglich die Freigabe eines auf der Ladebrücke 4 aufgenommenen Wechselbehälters 6 aus dem Verriegelungs- und Klemmzustand einschließlich des Abklappens des Kipphakens 24 in die inaktive Stellung umfassen.

Ein weiteres Betriebsablaufprogramm kann das Überführen eines Wechselbehälters aus dem Zustand gemäß Figur 1 in den Kippzustand gemäß Figur 6 mit Ausführung aller dazu erforderlichen Betriebsfunktionen umfassen. Auch das Zurückführen des Absetzkippers aus dem Zustand gemäß Figur 5 in den Zustand gemäß Figur 1 kann mit einem betreffenden Betriebsablaufprogramm gesteuert werden.

Ein weiteres Betriebsablaufprogramm sorgt dafür, dass ein bereits auf der Ladebrücke in Sollposition abgestellter Wechselbehälter 6 korrekt verriegelt und geklemmt wird, wobei ferner der Kipphaken in seine Fahrstellung eingeklappt wird und die Stützfüße ebenfalls eingezogen werden.

Vorzugsweise werden die Betriebsablaufprogramme, bei denen die Auslegerarme 8 nicht verschwenkt werden, durch Betätigen einer der Richtungstasten 52, 53 gestartet, nachdem sie zuvor durch Eingabe einer Tastenkombination ausgewählt wurden.

Eine Fernbedienung der in Figur 9 gezeigten Art könnte jedoch auch Einzeltasten zum Auswählen von Betriebsablaufprogrammen umfassen und/oder zur Reaktion auf Sprachsteuerbefehle eingerichtet sein.

Auch könnte eine entsprechende Bedienvorrichtung ortsfest am Absetzkipper vorgesehen sein.

Eine weitere in betreffende Betriebsablaufprogramme integrierbare Betriebsfunktion könne eine sogenannte Lastmomentbegrenzung sein. Hierzu erfolgt mittels geeigneter Sensoren, wie etwa Neigungssensoren, Drucksensoren oder Kraftsensoren, eine Erfassung eines kritischen Lastmomentes, dessen Überschreitung die Gefahr des Aufsteigens bzw. Hochkippens des Absetzkippers durch Verschwenken um dessen Hinterachse bzw. Hinterräder bei Aufnahme eines zu schweren Wechselbehälters 6 bedeuten würde.

## Patentansprüche

1. Absetzkipper umfassend
- einen Rahmen (4),
- eine an dem Rahmen (4) angebrachte Hubvorrichtung mit zwei um eine nahe des Hecks des Absetzkippers verlaufende, normalerweise horizontal liegende gemeinsame Schwenkachse (10) schwenkbaren Auslegerarmen (8) zum Heben und Senken eines zwischen den Auslegerarmen (8) positioniert daran anzuhängenden und mit einer Kipplagerbolzenanordnung ausgestatteten Wechselbehälters (6), so dass der Wechselbehälter (6) in einer Behälterwechselbetriebsart durch Verschwenken der Auslegerarme (8) über das Heck des Absetzkippers hinweg auf diesen aufgeladen oder von diesem abgesetzt- und in einer Kippbetriebsart in eine Kippstellung unter Verbleib auf dem Absetzkipper bewegt werden kann,
- eine hydraulische Antriebsvorrichtung mit wenigstens einem hydraulischen Hubzylinder (16) zum Verschwenken der Auslegerarme (8) um die Schwenkachse (10),
- eine Kipphakenanordnung mit wenigstens einem zwischen einer Passivstellung und einer Fangstellung bewegbaren Kipphaken (24) zur Ineingriffnahme eines Wechselbehälters (6) an dessen Kipplagerbolzenanordnung (30b) in der Kippbetriebsart,
- eine Stützvorrichtung mit ausfahrbaren und einziehbaren Stützfüßen (22) zur Abstützung und Stabilisierung des Absetzkippers am Boden,
- eine Steuereinrichtung (20) zur Steuerung von Betriebsfunktionen des Absetzkippers einschließlich der Schwenkbewegungen der Auslegerarme (8), der Ausfahr- und Einziehbewegungen der Stützfüße (22) und der Bewegungen des wenigstens einen Kipphakens (24) und
- eine Bedienvorrichtung (40) mit Bedienelementen (42 - 54) zur Abgabe von Steuerbefehlen an die Steuereinrichtung (20) und zur Aktivierung der Betriebsfunktionen,
**dadurch gekennzeichnet,**
**dass** die Steuereinrichtung (20) mittels der Bedienvorrichtung (40) dazu aktivierbar ist, wenigstens ein Betriebsablaufprogramm auszuführen, gemäß welchem bestimmte Betriebsfunktionen des Absetzkippers in zeitlich abgestimmter Folge automatisch aktiviert und gesteuert ausgeführt werden, dass das Betriebsablaufprogramm ausführbar ist, um einen Wechselbehälter (6) ausgehend von einer Transportstellung vom Absetzkipper über dessen Heck hinweg abzusetzen, wobei die gemäß dem Betriebsablaufprogramm automatisch aktivierten und gesteuerten bestimmten Betriebsfunktionen:
- das Ausfahren der Stützfüße (22),
- das Überführen jedes Kipphakens (24) der Kipphakenanordnung in die inaktive Stellung und
- das Schwenken der Auslegerarme (8) um deren Schwenkachse (10) umfassen, dass er eine Sensoreinrichtung zur Erfassung einer Schrägstellung des Absetzkippers relativ zur Horizontalstellung aufweist, und dass die Stützvorrichtung mittels der Steuereinrichtung (20) nach Maßgabe von Messinformationen der Sensoreinrichtung steuerbar ist, um die Stützfüße (22) so auszufahren, dass der Absetzkipper aus einer etwaigen Schrägstellung heraus der Horizontalstellung angenähert wird, wobei die Betriebsfunktion des Ausfahrens der Stützfüße (22) gemäß dem ersten Betriebsablaufprogramm das Erfassen einer etwaigen Schrägstellung des Absetzkippers- und das Ausfahren der Stützfüße in einer den Absetzkipper zumindest näherungsweise in die Horizontalstellung einstellenden Weise umfasst.

2. Absetzkipper nach Anspruch 1, **dadurch gekennzeichnet, dass** die Betriebsfunktion des Schwenkens der Auslegerarme (8) um deren Schwenkachse (10) eine Überladungskontrolle umfasst, bei der eine Wägung des Wechselbehälters (6) in einer bestimmten Schwenkstellung der Auslegerarme (8) erfolgt.

3. Absetzkipper nach einem der vorhergehenden Ansprüche, **dadurch gekennzeichnet, dass** er eine mittels der Steuereinrichtung (20) steuerbare Ladungssicherungseinrichtung aufweist, mittels welcher ein auf dem Absetzkipper aufgenommener Wechselbehälter (6) gegen Rutschen gesichert werden kann, wobei die gemäß dem Betriebsablaufprogramm aktivierten und gesteuerten bestimmten Betriebsfunktionen ferner das Überführen der Ladungssicherungseinrichtung in einen den Behälter (6) aus der Rutschsicherung freigebenden Zustand vor dem Schwenken der Auslegerarme (8) um deren Schwenkachse (10) umfasst.

4. Absetzkipper nach Anspruch 3, **dadurch gekennzeichnet, dass** die Steuereinrichtung (20) mittels der Bedienvorrichtung (40) dazu aktivierbar ist, ein Betriebsablaufprogramm auszuführen, gemäß welchem bestimmte Betriebsfunktionen des Absetzkippers in zeitlich abgestimmter Folge automatisch aktiviert und gesteuert ausgeführt werden, um einen Wechselbehälter (6) aus der Rutschsicherung freizugeben, wobei die gemäß diesem Betriebsablaufprogramm aktivierten und gesteuerten bestimmten Betriebsfunktionen:
- das Überführen jedes Kipphakens (24) der Kipphakenanordnung in die inaktive Stellung und
- das Überführen der Ladungssicherungseinrichtung in einen den Wechselbehälter (6) aus der Rutschsicherung freigebenden Zustand umfassen.

5. Absetzkipper nach Anspruch 3 oder 4, **dadurch gekennzeichnet, dass** die Ladungssicherungseinrichtung eine Klemmeinrichtung mit gesteuert verstellbaren Klemmbacken (32) zum Einklemmen eines Wechselbehälters (6) auf dem Absetzkipper und eine Verriegelungseinrichtung mit Verriegelungsklauen (28a, 28b) zur verriegelnden Ineingriffnahme eines Wechselbehälters (6) auf dem Absetzkipper aufweist und dass die Betriebsfunktion des Überführens der Ladungssicherungseinrichtung in einen den Behälter (6) aus der Rutschsicherung freigebenden Zustand:
- das Abrücken der Klemmbacken (32) vom Wechselbehälter (6) und
- das Freigeben des Wechselbehälters (6) aus der verriegelnden Ineingriffnahme der Verriegelingsklauen umfassen.

6. Absetzkipper nach einem der vorhergehenden Ansprüche, **dadurch gekennzeichnet, dass** die Auslegerarme (8) teleskopisch ein- und ausfahrbare Endelemente (34) aufweisen und dass die Steuereinrichtung (20) mittels der Bedienvorrichtung (40) dazu aktivierbar ist, ein Betriebsablaufprogramm auszuführen, gemäß welchem bestimmte Betriebsfunktionen des Absetzkippers in zeitlich abgestimmter Folge automatisch aktiviert und gesteuert ausgeführt werden, um den Absetzkipper bei darauf aufgenommenem Wechselbehälter (6) für eine Fahrt vorzubereiten, wobei die gemäß diesem weiteren Betriebsablaufprogramm aktivierten und gesteuerten bestimmten Betriebsfunktionen:
- das teleskopische Einfahren der Endelemente (34) der Auslegerarme (8),
- das Überführen der Ladungssicherungseinrichtung in einen den Wechselbehälter gegen Rutschen auf dem Absetzkipper sichernden Zustand,
- das Überführen des wenigstens einen Kipphakens (24) in eine Transportstellung und
- das Einziehen der Stützfüße (22)
umfassen.

7. Absetzkipper nach einem der vorhergehenden Ansprüche, **dadurch gekennzeichnet, dass** die Bedienvorrichtung (40) Bedienelemente aufweist, die zur Auswahl der einzelnen Betriebsfunktionen zur jeweiligen Steuerung mittels der Steuereinrichtung einzeln betätigbar sind, wobei ein betreffendes Betriebsablaufprogramm durch serielles Betätigen der den programmgemäß aktivierten Betriebsfunktionen zugeordneten Bedienelemente (42 - 54) innerhalb eines vorbestimmten Zeitfensters zu starten ist.

8. Absetzkipper nach einem der vorhergehenden Ansprüche, **dadurch gekennzeichnet, dass** die Bedienvorrichtung Bedienelemente aufweist, die jeweils einzelnen Betriebsablaufprogrammen zu deren Aufruf zugeordnet sind.

## Claims

1. Skip loader comprising
- a frame (4),
- a lifting device which is mounted on the frame (4) and has two extension arms (8), which can be pivoted about a common pivot axis (10) which extends close to the tail of the skip loader and is normally horizontal, for lifting and lowering an interchangeable container (6) which is to be attached to the extension arms (8) so as to be positioned therebetween and is equipped with a tilt bearing bolt arrangement, such that the interchangeable container (6), in a container interchanging mode, is loaded onto or unloaded from the skip loader by the extension arms (8) being pivoted beyond the tail of said loader and, in a tilting mode, can be moved into a tilted position while remaining on the skip loader,
- a hydraulic drive device having at least one hydraulic lifting cylinder (16) for pivoting the extension arms (8) about the pivot axis (10),
- a tilt hook arrangement having at least one tilt hook (24) which can be moved between a passive position and a catching position for engaging an interchangeable container (6) at the tilt bearing bolt arrangement (30b) thereof in the tilting mode,
- a support device having extendable and retractable support legs (22) for supporting and stabilising the skip loader on the ground,
- a controller (20) for controlling operating functions of the skip loader including the pivoting movements of the extension arms (8), the extending and retracting movements of the support legs (22) and the movements of the at least one tilt hook (24) and
- an operating device (40) having operating elements (42-54) for issuing control commands to the controller (20) and for activating the operating functions,
**characterised in that** the controller (20) can be activated by means of the operating device (40) in order to execute at least one operating sequence program, according to which particular operating functions of the skip loader are automatically activated and carried out in a controlled manner in a timed sequence, **in that** the operating sequence program can be executed in order to unload an interchangeable container (6), starting from a transporting position, from the skip loader beyond the tail thereof, the particular operating functions which are automatically activated and controlled according to the operating sequence program comprising:
- extending the support legs (22),
- moving each tilt hook (24) of the tilt hook arrangement into the inactive position and
- pivoting the extension arms (8) about the pivot axis (10) thereof, **in that** said skip loader has a sensor apparatus for detecting an inclined position of the skip loader relative to the horizontal position, and **in that** the support device can be controlled by the controller (20) on the basis of measurement information from the sensor apparatus in order to extend the support legs (22) such that the skip loader is brought closer to the horizontal position from a possible inclined position, the operating function of extending the support legs (22) according to the first operating sequence program comprising detecting a possible inclined position of the skip loader and extending the support legs in a manner that sets the skip loader at least approximately into the horizontal position.

2. Skip loader according to claim 1, **characterised in that** the operating function of pivoting the extension arms (8) about the pivot axis (10) thereof comprises an overload control, in which the interchangeable container (6) is weighed in a specific pivoting position of the extension arms (8).

3. Skip loader according to either of the preceding claims, **characterised in that** it has a load securing means which can be controlled by the controller (20) and by means of which an interchangeable container (6) received on the skip loader can be secured against slipping, the particular operating functions which are activated and controlled according to the operating sequence program additionally comprising moving the load securing means into a state which releases the container (6) from the anti-slip securing before the extension arms (8) are pivoted about the pivot axis (10) thereof.

4. Skip loader according to claim 3, **characterised in that** the controller (20) can be activated by means of the operating device (40) in order to execute an operating sequence program, according to which particular operating functions of the skip loader are automatically activated and carried out in a controlled manner in a timed sequence in order to release an interchangeable container (6) from the anti-slip securing, the particular operating functions which are activated and controlled according to said operating sequence program comprising:
- moving each tilt hook (24) of the tilt hook arrangement into the inactive position and
- moving the load securing means into a state which releases the interchangeable container (6) from the anti-slip securing.

5. Skip loader according to either claim 3 or claim 4, **characterised in that** the load securing means has a clamping means comprising clamping jaws (32) which can be adjusted in a controlled manner for clamping an interchangeable container (6) on the skip loader, and a locking means having locking claws (28a, 28b) for locking engagement of an interchangeable container (6) on the skip loader, and **in that** the operating function of moving the load securing means into a state which releases the container (6) from the anti-slip securing comprises:
- removing the clamping jaws (32) from the interchangeable container (6) and
- releasing the interchangeable container (6) from the locking engagement of the locking claws.

6. Skip loader according to any of the preceding claims, **characterised in that** the extension arms (8) have telescopically extendable and retractable end elements (34) and **in that** the controller (20) can be activated by means of the operating device (40) in order to execute an operating sequence program, according to which particular operating functions of the skip loader are automatically activated and carried out in a controlled manner in a timed sequence in order to prepare the skip loader having received an interchangeable container (6) thereon for a journey, the particular operating functions which are activated and controlled according to this additional operating sequence program comprising:
- telescopically retracting the end elements (34) of the extension arms (8),
- moving the load securing means into a state which secures the interchangeable container against slipping on the skip loader,
- moving the at least one tilt hook (24) into a transporting position and
- retracting the support legs (22).

7. Skip loader according to any of the preceding claims, **characterised in that** the operating device (40) has operating elements which can be actuated individually for selecting the individual operating functions for being respectively controlled by the controller, a relevant operating sequence program having to be started within a predetermined time window by serially actuating the operating elements (42-54) which are associated with the operating functions which are activated according to the program.

8. Skip loader according to any of the preceding claims, **characterised in that** the operating device has operating elements which are each associated with individual operating sequence programs for the invocation thereof.

## Revendications

1. Camion à benne basculante comprenant :
- un châssis (4),
- un dispositif élévateur agencé sur le châssis (4) avec deux bras en porte-à-faux (8) pivotant autour d'un axe de pivotement (10) commun normalement horizontal, passant à proximité de l'arrière du camion à benne basculante, pour soulever et abaisser un conteneur interchangeable (6) positionné entre les bras en porte-à-faux (8), à y suspendre, et doté d'un dispositif formant axe de palier oscillant, de sorte que le conteneur interchangeable (6) peut être mû, dans un mode opératoire de changement de conteneur, par pivotement des bras en porte-à-faux (8) au-dessus de l'arrière du camion à benne basculante en étant chargé sur celui-ci ou écarté de celui-ci et, dans un mode opératoire de basculement, être mû dans une position de basculement en restant sur le camion à benne basculante,
- un dispositif d'entraînement hydraulique avec au moins un vérin hydraulique (16) pour le pivotement des bras en porte-à-faux (8) autour de l'axe de pivotement (10),
- un dispositif formant crochet basculant avec au moins un crochet basculant (24) pouvant être déplacé entre une position passive et une position d'arrêt pour l'engrènement d'un conteneur interchangeable (6) sur son dispositif formant axe de palier oscillant (30b) dans le mode opératoire de basculement,
- un dispositif d'appui avec des béquilles extensibles et escamotables (22) pour l'appui et la stabilisation au sol du camion à benne basculante,
- un dispositif de commande (20) pour commander des fonctions opérationnelles du camion à benne basculante, y compris des mouvements pivotants des bras en porte-à-faux (8), des mouvements d'extension et de rétraction des béquilles (22) et des mouvements du au moins un crochet basculant (24) et
- un dispositif de commande (40) avec des éléments de commande (42 - 54) pour donner des ordres de commande au dispositif de commande (20) et pour activer les fonctions opérationnelles,
**caractérisé en ce que** le dispositif de commande (20) peut être activé à l'aide du dispositif de commande (40) afin de réaliser au moins un programme de procédure opérationnelle, selon lequel certaines fonctions opérationnelles du camion à benne basculante sont réalisées en étant activées et commandées automatiquement de façon coordonnée dans le temps, **en ce que** le programme de procédure opérationnelle peut être réalisé pour écarter un conteneur interchangeable (6) à partir d'une position de transport du camion à benne basculante par-dessus l'arrière de celui-ci, dans lequel les fonctions opérationnelles définies activées et commandées automatiquement selon le programme de procédure opérationnelle comprennent :
- l'extension des béquilles (22),
- le transfert de chaque crochet basculant (24) du dispositif à crochet basculant dans la position inactive et
- le pivotement des bras en porte-à-faux (8) autour de leur axe de pivotement (10), **en ce qu'**il présente un dispositif formant capteur pour détecter une position oblique du camion à benne basculante par rapport à la position horizontale, et **en ce que** le dispositif d'appui peut être commandé à l'aide du dispositif de commande (20) conformément aux informations de mesure du dispositif formant capteur, afin d'étendre les béquilles (22) de manière telle que le camion à benne basculante est rapproché de la position horizontale à partir d'une position oblique éventuelle, dans lequel la fonction opérationnelle de l'extension des béquilles (22) selon le premier programme de procédure opérationnelle comprend la détection d'une position oblique éventuelle du camion à benne basculante et l'extension des béquilles d'une manière plaçant le camion à benne basculante au moins approximativement dans la position horizontale.

2. Camion à benne basculante selon la revendication 1, **caractérisé en ce que** la fonction opérationnelle du pivotement des bras en porte-à-faux (8) autour de leur axe de pivotement (10) comprend un contrôle de surcharge, dans lequel un pesage du conteneur interchangeable (6) a lieu dans une certaine position de pivotement des bras en porte-à-faux (8).

3. Camion à benne basculante selon l'une des revendications précédentes, **caractérisé en ce qu'**il présente un dispositif d'arrimage du chargement manoeuvrable au moyen du dispositif de commande (20), à l'aide duquel un conteneur interchangeable (6) logé sur le camion à benne basculante peut être assuré contre le glissement, dans lequel les fonctions opérationnelles définies activées et commandées selon le programme de procédure opérationnelle comprennent, en outre, le transfert du dispositif d'arrimage du chargement dans un état libérant le conteneur (6) de la protection anti-glisse avant le pivotement des bras en porte-à-faux (8) autour de leur axe de pivotement (10).

4. Camion à benne basculante selon la revendication 3, **caractérisé en ce que** le dispositif de commande (20) peut être activé à l'aide du dispositif de commande (40) afin de réaliser un programme de procédure opérationnelle selon lequel certaines fonctions opérationnelles du camion à benne basculante sont réalisées en étant activées et commandées automatiquement de façon coordonnée dans le temps, pour libérer un conteneur interchangeable (6) de la protection anti-glisse, dans lequel les fonctions opérationnelles définies activées et commandées selon le programme de procédure opérationnelle comprennent :
- le transfert de chaque crochet basculant (24) du dispositif formant crochet basculant dans la position inactive et
- le transfert du dispositif d'arrimage du chargement dans un état libérant le conteneur (6) de la protection anti-glisse.

5. Camion à benne basculante selon la revendication 3 ou 4, **caractérisé en ce que** le dispositif d'arrimage du chargement présente un dispositif de serrage avec des mâchoires de serrage (32) déplaçables en étant commandées pour serrer un conteneur interchangeable (6) sur le camion à benne basculante et un dispositif de verrouillage avec des griffes de verrouillage (28a, 28b) pour l'engrènement à verrouillage d'un conteneur interchangeable (6) sur le camion à benne basculante et **en ce que** la fonction opérationnelle du transfert du dispositif d'arrimage du chargement dans un état libérant le conteneur (6) de la protection anti-glisse comprend :
- le retrait des mâchoires de serrage (32) du conteneur interchangeable (6) et
- la libération du conteneur interchangeable (6) de l'engrènement à verrouillage des griffes de verrouillage.

6. Camion à benne basculante selon l'une des revendications précédentes, **caractérisé en ce que** les bras en porte-à-faux (8) présentent des éléments terminaux (34) rétractables et extensibles de façon télescopique et **en ce que** le dispositif de commande (20) peut être activé à l'aide du dispositif de commande (40) afin de réaliser un programme de procédure opérationnelle, selon lequel certaines fonctions opérationnelles du camion à benne basculante sont réalisées en étant activées et commandées automatiquement de façon coordonnée dans le temps, afin de préparer le camion à benne basculante pour un trajet, en ayant le conteneur interchangeable (6) logé dessus, dans lequel les fonctions opérationnelles définies activées et commandées selon cet autre programme de procédure opérationnelle comprennent :
- la rétraction télescopique des éléments terminaux (34) des bras en porte-à-faux (8),
- le transfert du dispositif d'arrimage du chargement dans un état empêchant le glissement du conteneur interchangeable sur le camion à benne basculante,
- le transfert du au moins un crochet basculant (24) dans une position de transport et
- le repli des béquilles (22).

7. Camion à benne basculante selon l'une des revendications précédentes, **caractérisé en ce que** le dispositif de commande (40) présente des éléments de commande qui peuvent être activés individuellement pour la sélection des différentes fonctions opérationnelles pour la commande respective à l'aide du dispositif de commande, dans lequel un programme de procédure opérationnelle pertinent doit être débuté dans un intervalle de temps prédéterminé par un actionnement en série des éléments de commande (42 - 54) affectés aux fonctions opérationnelles activées selon le programme.

8. Camion à benne basculante selon l'une des revendications précédentes, **caractérisé en ce que** le dispositif de commande présente des éléments de commande qui sont à chaque fois affectés à leur appel à différents programmes de procédure opérationnelle.
